# EUROPÄISCHE PATENTANMELDUNG

(11) **EP 3 689 682 A1**
(43) Veröffentlichungstag der Anmeldung: **05.08.2020**
(21) Anmeldenummer: 20164771.6
(22) Anmeldetag: 10.06.2014
(51) Int. Cl.: B60Q 1/44, B60Q 1/46

(54) **EINRICHTUNG ZUR VERMEIDUNG VON AUFFAHRUNFÄLLEN UND IHR FUNKTIONSSYSTEM**

(30) Priorität: 10.06.2013 ES 201300843
(62) Teilanmeldung aus: 14811347.5
(71) Anmelder: Pino Méndez, Juán José, 36860 Ponteareas (Pontevedra ) (ES)
(72) Erfinder: Pino Méndez, Juán José, 36860 Ponteareas (Pontevedra ) (ES)
(74) Vertreter: Balder IP Law, S.L.

(57) **Zusammenfassung**

Einrichtung zur Vermeidung von Auffahrunfällen und entsprechendes Funktionssystem, die/das von einer Steuereinheit gebildet ist, die mit dem elektronischen Schaltkreis des Fahrzeugs verbunden ist und einen Signalempfänger und einen Signalsender umfasst, die in Zusammenarbeit mit einer GPS-Antenne, einem Gaspedalencoder und der dritten Bremsleuchte die folgenden Funktionen ausführt: Aktivierung der dritten Bremsleuchte, so dass diese blinkt, wenn das Fahrzeug auf einer Autobahn oder einer Schnellstraße mit einer geringeren Geschwindigkeit als der minimal zulässigen Geschwindigkeit fährt, 0,5 Sekunden vor dem Treten des Bremspedals (6) aktiviert der Gaspedalencoder die dritte Bremsleuchte, und bei einer abrupten Verringerung der Fahrzeuggeschwindigkeit wird auch die dritte Bremsleuchte aktiviert.

## Beschreibung

Die vorliegende Erfindung betrifft eine Einrichtung, die nachfolgende Fahrzeuge durch ein Blinken der dritten Bremsleuchte davor warnt, dass eine Gefahr von Auffahrunfällen besteht, wobei dieses Signal temporär unter drei Annahmen abgegeben wird: Erstens, wenn das vorausfahrende Fahrzeug sich anschickt zu bremsen, zweitens, wenn das vorausfahrende Fahrzeug seine Geschwindigkeit abrupt vermindert und drittens, wenn der Verkehr mit ungewöhnlich langsamer Geschwindigkeit fließt.

Diese Erfindung löst das Problem der Auffahrunfälle, die auf Straßen und Autobahnen durch abruptes Bremsen, durch Fahren bei verminderter Geschwindigkeit oder einfach durch Bremsen erzeugt werden.

Die erfindungsgemäße Einrichtung bietet erhebliche Vorteile gegenüber bekannten Bremssignal-Einrichtungen, deren wichtigste die Einfachheit der Zusammensetzung und Ausnutzung elektrischer und elektronischer Fahrzeugkomponenten sind.

Ein weiterer wichtiger Vorteil ist die Verwendung des GPS-Systems, um die Art der Straße zu erkennen, auf der das Fahrzeug fährt, und um im Falle einer ungewöhnlich langsamen Fahrt auf Autobahnen und Schnellstraßen die Steuereinheit zu benachrichtigen, das Lichtsignal der dritten Bremsleuchte zu aktivieren.

### HINTERGRUND DER ERFINDUNG

Es ist derzeit ein System bekannt, mit dem einige Fahrzeuge ausgestattet sind, durch das die Notbeleuchtung eingeschaltet wird, wenn bei einem abruptem Bremsvorgang das ABS-System in Betrieb tritt. Des Weiteren ist die Installation von LEDs hoher Helligkeit in den Bremsleuchten bekannt, vor allem in der dritten Bremsleuchte, die innerhalb eines Bruchteils einer Sekunde vor einer herkömmlichen Glühbirne erleuchten.

Obwohl keine mit der in dieser Beschreibung der vorliegenden Erfindung identische Erfindung aufgefunden wurde, werden im Folgenden die aufgefundenen Dokumente beschrieben, die den mit der Erfindung zusammenhängenden Stand der Technik darstellen. So betrifft Dokument ES 2 051 336 T3 eine Fahrzeugverzögerungs-Warneinrichtung, die Folgendes umfasst: eine piezoelektrische Sensoreinrichtung, die mit dem Gaspedal oder der Bodenplatte zur Ausgabe eines ersten Signals verbunden ist, wenn sie einer entsprechenden Belastung unterworfen wird; Kontakteinrichtungen, die untereinander oder mit dem Gaspedal bzw. der Bodenplatte zur Kontaktierung mit dem piezoelektrischen Sensor beim Loslassen des Gaspedals verbunden sind, um zu veranlassen, dass die Sensoreinrichtung ein erstes Signal in Reaktion auf die Veränderung der Belastung ausgibt, die durch die Kontakteinrichtung auf die piezoelektrische Sensoreinrichtung ausgeübt wird; und mit den Bremsleuchten und der piezoelektrischen Sensoreinrichtung verbundene Schaltkreiselemente, die das von der piezoelektrischen Sensoreinrichtung erzeugte erste Signal analysieren und die die Bremsleuchten in Abhängigkeit von der Analyse aktivieren, wenn das erste Signal über einem vorbestimmten Schwellenwert liegt. Obwohl das Problem der Verlangsamung des vorausfahrenden Fahrzeugs gelöst wird, geschieht das auf von der vorgeschlagenen Erfindung sehr unterschiedliche Weise.

Dokument ES 2 138 898 A1 beschreibt ein automatisches System zur Vermeidung von Unfällen in jedem Fahrzeugtyp, das ein elektrisches System umfasst, das mit dem elektrischen Schaltkreis des Fahrzeugs verbunden ist, umfassend: mindestens einen integrierten Schaltkreis mit einer Einrichtung zum Erfassen des Sicherheitsabstandes oder der Entfernung zwischen dem Fahrzeug und einem anderen vorausfahrenden Fahrzeug und/oder einem vorausliegenden Hindernis, welcher Abstand oder welche Entfernung in Beziehung mit der Geschwindigkeit des Fahrzeugs steht, wobei automatisch Befehle ausgelöst werden, um das Fahrzeug zu verlangsamen und/oder zu stoppen, um eine Kollision zu vermeiden, sowie Einrichtungen zur zeitweisen Abschaltung der Antriebsmittel. Selbst mit seinem Automatismus wird sicher nicht das Problem mit der Sicherheit und Einfachheit wie mit der vorgeschlagenen Erfindung gelöst.

ES 1 066 558 U soll die Aufgabe mittels eines Aufzeichnungsgeräts, das Bilder mit einer Vielzahl von im Fahrzeug befindlicher Kameras aufzeichnet, und eines Datenmikroprozessors, Schutzmitteln und eines Warnsignals an den Fahrer des Fahrzeugs lösen, indem die Kameras die Anwesenheit und die Position eines Hindernisses vor oder hinter dem Fahrzeug erfassen und die Daten der Anwesenheit und der Position des Hindernisses an den Mikroprozessor senden, der mittels der von der Kamera erhaltenen Daten die Position und die Relativgeschwindigkeit des Hindernisses gegenüber dem Fahrzeug berechnet, wobei ein Warnsignal für den Fahrer nach vorgegebenen Werten der Position und der relativen Annäherungsgeschwindigkeit zwischen dem Hindernis und dem Fahrzeug aktiviert wird und weiterhin Schutzmittel nach anderen vorgegebenen Werten der Position und der relativen Annäherungsgeschwindigkeit zwischen dem Hindernis und dem Fahrzeug aktiviert werden. Die Lösung ist sehr verschieden zu der durch die vorliegende Erfindung vorgeschlagenen.

### BESCHREIBUNG DER ERFINDUNG

Die erfindungsmäße Einrichtung zur Vermeidung von Auffahrunfällen wird aus einer elektronischen Steuereinheit gebildet, die mit dem elektronischen Schaltkreis des Fahrzeugs verbunden ist, mit einem Signalempfänger und einem Signalsender ausgestattet und so programmiert ist, dass in Zusammenarbeit mit einer GPS-Antenne (4), einem Gaspedalencoder (7) und der dritten Bremsleuchte (5) folgende Funktionen ausgeführt werden:
- Wenn das Fahrzeug auf einer Autobahn oder einer Schnellstraße mit einer geringeren Geschwindigkeit als der minimal zulässigen Geschwindigkeit fährt, empfängt die Steuereinheit ein Signal vom GPS, das die Steuereinheit an den Sender sendet, und dieser aktiviert die LEDs der dritten Bremsleuchte, so dass diese blinkt.
- 0,5 Sekunden vor dem Treten des Bremspedals erkennt der Gaspedalencoder, dass der Fahrer des Fahrzeugs den Fuß abrupt (x Impulse pro Sekunde) von dem Gaspedal zurückgezogen hat, und sendet ein Signal an die Steuereinheit, so dass diese wiederum ein Signal an die dritte Bremsleuchte sendet, so dass diese blinkt.
- Falls eine abrupte Verringerung der Fahrzeuggeschwindigkeit, sogar ohne Treten der Bremse oder selbst beim Treten dieser, eintritt, empfängt die Steuereinheit dieses Signal des elektronischen Schaltkreises des Fahrzeugs (Multiplexing Fahrzeug) oder des ABS-Rechners (im Falle von nicht vorhandenem Multiplexing) und sendet dem Sender ein Signal, sodass dieser wiederum ein Signal an die dritte Bremsleuchte (5) sendet, so dass diese blinkt.

### KURZE BESCHREIBUNG DER ZEICHNUNGEN

In Folgenden wird auf eine Figur Bezug genommen, die es ermöglicht, die Beschreibung besser zu verstehen und eine besondere, nicht einschränkende Ausführungsform des Gegenstandes der vorliegenden Erfindung zeigt.

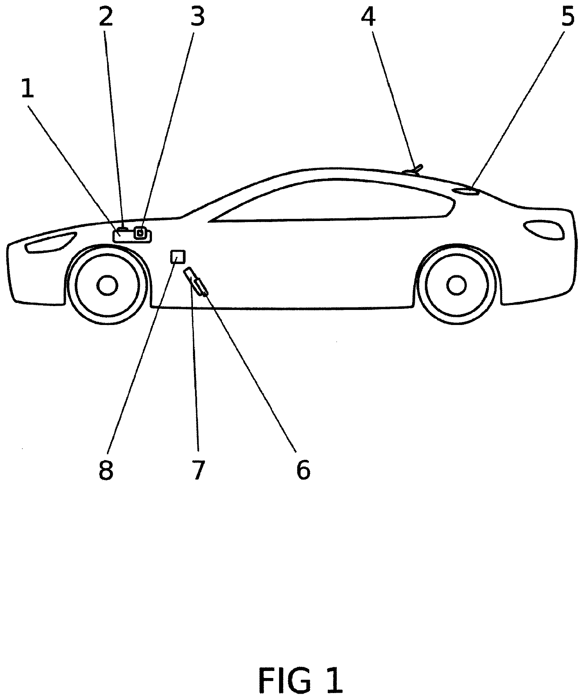

Figur 1: Schematische Darstellung des Fahrzeugs und der Bezugspunkte

In dieser Figur bezeichnen die folgenden Bezugszeichen:
1. Steuereinheit
2. Signalempfänger
3. Signalsender
4. GPS-Antenne
5. Dritte Bremsleuchte
6. Bremspedal
7. Gaspedalencoder
8. Gaspedal

### BESCHREIBUNG EINER BEVORZUGTEN AUSFÜHRUNGSFORM

Im Folgenden wird eine bevorzugte Ausführungsform der Erfindung, die nur eine von einer Vielzahl von Bauweisen ist, die sich für die industrielle Verwirklichung eignet, sowie ein oben beschriebener Aufbau beschrieben.

Eine bevorzugte Ausführungsform der erfindungsgemäßen Einrichtung zur Vermeidung von Auffahrunfällen kann basierend auf einer elektronischen Steuereinheit (1) verwirklicht werden, die mit dem elektronischen Schaltkreis des Fahrzeugs verbunden ist und mit einem Signalempfänger (2) und einem Signalsender (3) ausgestattet ist, und so programmiert ist, dass in Zusammenarbeit mit der GPS-Antenne (4), dem Gaspedalencoder (7) und der dritten Bremsleuchte (5) folgende Funktionen ausgeführt werden:
- Wenn das Fahrzeug auf einer Autobahn oder einer Schnellstraße mit einer geringeren Geschwindigkeit als der minimal zulässigen Geschwindigkeit fährt, empfängt die Steuereinheit ein Signal von der GPS-Antenne (4), das die Steuereinheit an den Sender (3) sendet, und dieser aktiviert die LEDs der dritten Bremsleuchte (9), so dass diese blinkt.
- 0,5 Sekunden vor dem Treten des Bremspedals (6) erkennt der Gaspedalencoder (7), dass der Fahrer des Fahrzeugs den Fuß abrupt (x Impulse pro Sekunde) von dem Gaspedal (8) zurückgezogen hat, und sendet ein Signal an die Steuereinheit (1), so dass diese wiederum ein Signal an die dritte Bremsleuchte (5) sendet, so dass diese blinkt.
- Falls eine abrupte Verringerung der Fahrzeuggeschwindigkeit, sogar ohne Treten der Bremse (6) oder selbst beim Treten dieser, eintritt, empfängt die Steuereinheit (1) dieses Signal der abrupten Verringerung vom elektronischen Schaltkreis des Fahrzeugs (Multiplexing Fahrzeug) oder vom ABS-Rechner (im Falle von nicht vorhandenem Multiplexing) und sendet dem Sender (7) ein Signal, sodass dieser wiederum ein Signal an die dritte Bremsleuchte (5) sendet, so dass diese blinkt.

## Patentansprüche

1. Einrichtung zur Vermeidung von Auffahrunfällen und entsprechendes Funktionssystem, die/das von einer Steuereinheit (1) gebildet ist, die mit dem elektronischen Schaltkreis des Fahrzeugs verbunden ist und einen Signalempfänger (2) und einen Signalsender (3) umfasst, **dadurch gekennzeichnet, dass** in Zusammenarbeit mit der GPS-Antenne (4), dem Gaspedalencoder (7) und der dritten Bremsleuchte (5) die folgenden Funktionen ausgeführt werden:
- Wenn das Fahrzeug auf einer Autobahn oder einer Schnellstraße mit einer geringeren Geschwindigkeit als der minimal zulässigen Geschwindigkeit fährt, empfängt die Steuereinheit (1) ein Signal von der GPS-Antenne (4), das die Steuereinheit an den Sender (3) sendet, und dieser aktiviert die LEDs der dritten Bremsleuchte (9), so dass diese blinkt.
- 0,5 Sekunden vor dem Treten des Bremspedals (6) erkennt der Gaspedalencoder (7), dass der Fahrer des Fahrzeugs den Fuß abrupt (x Impulse pro Sekunde) von dem Gaspedal (8) zurückgezogen hat, und sendet ein Signal an die Steuereinheit (1), so dass diese wiederum ein Signal an die dritte Bremsleuchte (5) sendet, so dass diese blinkt.
- Falls eine abrupte Verringerung der Fahrzeuggeschwindigkeit, sogar ohne Treten der Bremse (6) oder selbst beim Treten dieser, eintritt, empfängt die Steuereinheit (1) dieses Signal der abrupten Verringerung vom elektronischen Schaltkreis des Fahrzeugs (Multiplexing Fahrzeug) oder vom ABS-Rechner (im Falle von nicht vorhandenem Multiplexing) und sendet dem Sender (7) ein Signal, sodass dieser wiederum ein Signal an die dritte Bremsleuchte (5) sendet, so dass diese blinkt.
